# EUROPÄISCHE PATENTSCHRIFT

(11) **EP 0 501 336 B1**
(45) Veröffentlichungstag und Bekanntmachung des Hinweises auf die Patenterteilung: **05.06.1996**
(21) Anmeldenummer: 92102943.5
(22) Anmeldetag: 21.02.1992
(51) Int. Cl.: G02B 6/44

(54) **Lichtwellenleiter-Aufteilungsgestell**
Separating housing for lightwave guides
Boîtier de séparation de fibres optiques

(30) Priorität: 27.02.1991 DE 4106170; 20.09.1991 DE 4131389
(43) Veröffentlichungstag der Anmeldung: 02.09.1992
(73) Patentinhaber: SIEMENS AKTIENGESELLSCHAFT, D-80333 München (DE)
(72) Erfinder: Finzel, Lothar, Dipl.-Ing., W-8044 Unterschleissheim (DE); Ruckgaber, Thomas, Dipl.-Ing., W-8000 München 21 (DE)

(56) Entgegenhaltungen:
- EP-A- 0 333 316
- EP-A- 0 341 027
- EP-A- 0 356 942
- US-A- 4 832 436

## Beschreibung

Die Erfindung betrifft ein Lichtwellenleiter-Aufteilungsgestell nach dem Oberbegriff des Patentanspruchs 1.

Bei Lichtwellenleiteranlagen werden wie bei den bisherigen Kabelanlagen Verteiler- bzw. Endgestelle vorgesehen. Zum Verbinden von Glasfasern werden Spleißelemente verwendet, die in Kassetten angeordnet sind. Die Kassetten dienen auch zur Aufnahme der sogenannten Reservelänge der Glasfasern. Andere Kassetten beinhalten Koppelelemente, mit denen auf mehrere Lichtwellenleiter verzweigt wird. Die Kassetten werden in Gestellen angeordnet, wobei jede Kassette einzeln zugänglich sein muß, um Rangier- oder Reparaturarbeiten durchführen zu können. Aus der Patentschrift DE 35 40 472 C2 ist eine solche Vorrichtung zur Aufbewahrung von Kassetten bekannt. Die einzelnen Kassetten sind hierbei einzeln schwenkbar angeordnet und können mittels einer Schiebe-Kipp-Mechanik von einer vertikalen Aufbewahrungslage in eine horizontale Entnahmelage geschwenkt werden. Diese Vorrichtung erscheint für größere Gestelle weniger geeignet.

Aus der deutschen Offenlegungsschrift DE-A-35 42 724 ist eine Abschlußgarnitur für ein optisches Kabel bekannt, die zur Aufnahme mehrerer Kassettenblöcke dient. Diese können über Schwenkarme stets in eine normale Arbeitshöhe gebracht werden, in der ein Rangieren und Reparieren leicht möglich ist. Bei dieser Anordnung ist jedoch die geringe Packungsdichte an Kassetten nachteilig. Der Oberbegriff des Patentanspruchs 1 stützt sich auf dieses Dokument.

Aufgabe der Erfindung ist es, ein Lichtwellenleiter-Aufteilungsgestell anzugeben, das bei geringem Raumbedarf eine große Anzahl von Kassettenblöcken aufnehmen kann und eine gute Zugänglichkeit zu allen Kassetten ermöglicht.

Die Lösung dieser Aufgabe ist in einem Lichtwellenleiter-Aufteilungsgestell gemäß Patentanspruch 1 angegeben. Vorteilhafte Weiterbildungen der Erfindung sind in den Unteransprüchen angegeben.

Vorteilhaft ist die gute Zugänglichkeit der einzelnen Kassetten. Die Kassettenhalter sind nach vorn in die Waagerechte kippbar. Die Kassettenblöcke können dann einzeln entnommen werden.

Hierbei ist es zweckmäßig, wenn mehrere Ablagefächer vorgesehen sind, in die jeweils ein Kassettenblock einschiebbar ist. Dieser wird durch ein federndes Element und durch die Schwerkraft fixiert.

Zur Konstruktion des Kassettenhalters wird zweckmäßigerweise ein U-Profil verwendet, dessen Seitenteile als Seitenführung für die Kassettenblöcke dienen und auch die mechanische Stabilität vergrößern.

Zur Führung der Kassettenblöcke reichen an einem Seitenteil des U-Profils angeordnete Führungsstege aus. Hierdurch wird auch Platz für eine Verschraubung der einzelnen Kassetten zu einem Kassettenblock gewonnen.

Vorteilhaft ist es, wenn die Kassetten mit ihrer Stirnseite in den Kassettenhalter eingeschoben werden, wobei die gegenüberliegende Stirnseite mit den Anschlußkabeln schräg nach oben ragt. Die schräge Anordnung der Kassettenblöcke ermöglicht eine günstige Führung der Anschlußkabel über den oberen Rand des Kassettenhalters hinweg in einer großen Schleife zur Kabelabfangung. Es hängt von den Abmessungen des Aufteilungsgestells ab, ob ein waagerechter oder senkrechter Einbau der Kassetten günstiger ist.

Vorteilhaft sind die beiden Verdrahtungsebenen. In der Zwischenkammer verlaufen lediglich die Adern der Anschlußkabel. In der Regel müssen in dieser Verdrahtungsebene nach dem Anschluß der LWL-Kabel keine weiteren Rangierarbeiten vorgenommen werden. Durch Abnehmen oder Hochklappen der außen liegenden Aufnahmekammer ist ein einfacher Zugriff zu der Zwischenkammer bei der Montage und bei Reparaturarbeiten möglich. Das Einlegen von Verbindungsadern für die LWL-Kassetten erfolgt in hochgeklappten Zustand des Kassettenhalters.

Vorteilhaft hierbei ist, wenn die Außenseite der außen liegenden Aufnahmekammer geschlitzt ist und eine Umlenkeinrichtung für die LWL-Adern in deren unterem Bereich vorgesehen ist. Hierdurch können die LWL-Adern problemlos in die Aufnahmekammer eingelegt werden, in der sie sich durch ihre Biegesteifigkeit selbs fixieren.

Bei einer Weiterbildung des LWL-Aufteilungsgestells ist es zweckmäßig eine Aufnahmeeinrichtung für durchgehende LWL-Adern vorzusehen, bei der Dämpfungsverluste durch ein Spannen der LWL-Aderr vermieden werden.

Ein Ausführungsbeispiel der Erfindung und zweckmäßige Weiterbildungen werden anhand von Figuren näher erläutert.

Es zeigen:
- Fig. 1: ein Lichtwellenleiter-Aufteilungsgestell
- Fig. 2: eine Seitenansicht eines Kassettenhalters,
- Fig. 3: den nach vorne geklappten Kassettenhalters,
- Fig. 4: ein Detail des Kassettenhalters in der Seitenansicht,
- Fig. 5: den Kassettenhalter in der Aufsicht,
- Fig. 6: eine Variante des Kassettenhalters,
- Fig. 7: einen Kassettenblock,
- Fig. 8: eine Seitenansicht des LWL-Aufteilungsgestells,
- Fig. 9: die Aufsicht auf einen Kassettenhalter mit Zwischen- und Aufnahmekammer,
- Fig. 10: die Vorderansicht der Aufnahmekammer,
- Fig. 11: das LWL-Aufteilungsgestellt mit einer Aufnahmeeinrichtung und
- Fig. 12: die Vorderansicht der Aufnahmeeinrichtung.

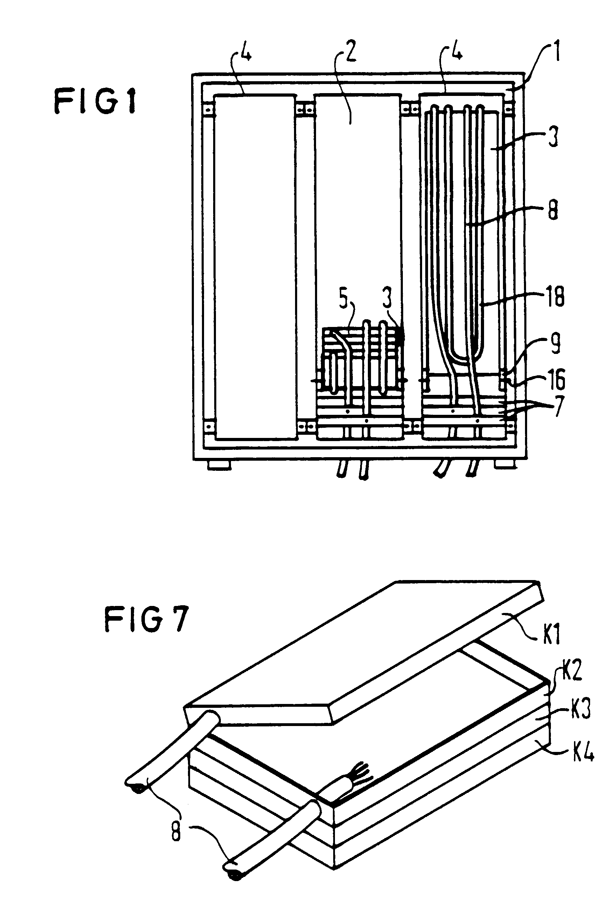

Das in Figur 1 dargestellte Lichtwellenleiter(LWL)-Aufteilungsgestell enthält drei Verteilereinschübe 2. Jeder Verteilereinschub besteht aus einem Verteilergehäuse 4 und einem ausklappbaren Kassettenhalter 3. Als LWL-Aufteilungsgestell kann ein übliches Verteilergestell verwendet werden. Es ist auch eine übereinanderliegende Anordnung der Verteilereinschübe möglich.

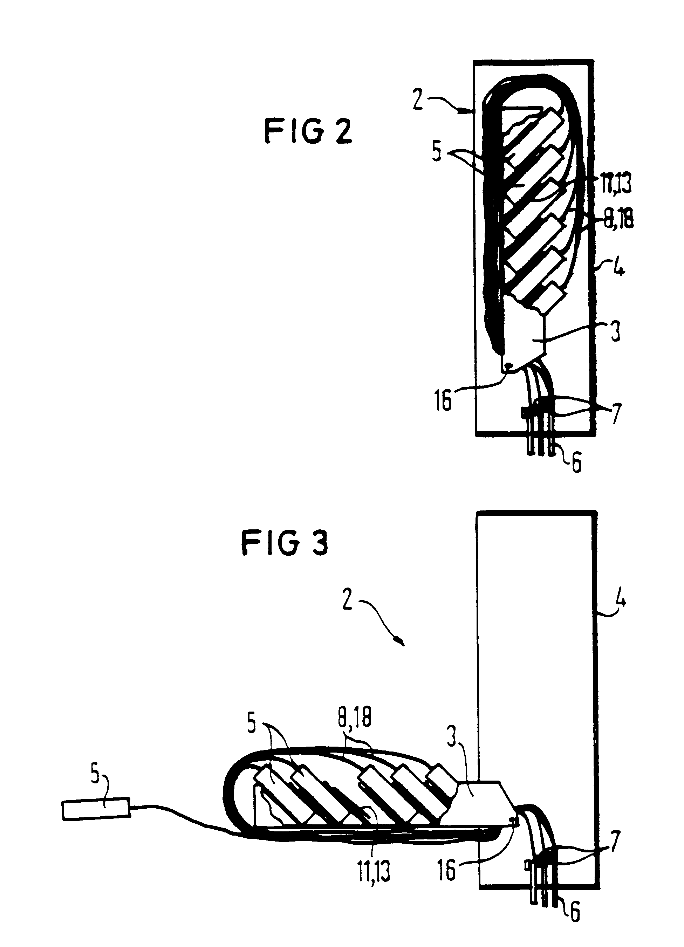

In Figur 1 sind nur zwei der Verteilereinschübe 2 mit Kassettenhaltern 3 bestückt; der mittlere Kassettenhalter ist nach vorn geklappt, so daß ein Kassettenblock 5 sichtbar wird. Die Anschlußkabel 6 werden an den Kabelabfangungen 7 befestigt und die einen oder mehrere Lichtwellenleiter enthaltenden Anschlußadern 8 sind über den oberen Rand des Kassettenhalters zu den einzelnen Kassetten geführt. Anschlußadern die zu anderen Kassetten eines Kassettenhalters führen, die Verbindungsadern 18, werden ebenfalls in einer langen Schleife verlegt. So ist jeder einzelne Kassettenblock bequem entnehmbar und weist noch eine zusätzliche Adernlänge auf um an ihm bzw. einzelnen Kassetten Montage- oder Reparaturarbeiten bequem durchführen zu können. Ein ungewolltes Herunterklappen des Kassettenhalters wird durch Reibungsscheiben 9 zwischen ihm und dem Verteilergehäuse 4 verhindert. Endanschläge 10 (Figur 3) sorgen für eine waagerechte Entnahmelage.

In Figur 2 ist ein Kassettenhalter 3 in der Seitenansicht dargestellt. Eine Seitenwand des Verteilergehäuses 4 und Teile der Seitenwand des u-förmig ausgebildeten Kassettenhalters 3 sind entfernt. Der Kassettenhalter weist mehrere als Führungsstege 11 ausgebildete Halteeinrichtungen auf, die von der Frontseite des Kassettenhalters ausgehend schräg nach oben verlaufen. In die so gebildeten Ablagefächer werden die Kassettenblöcke 5 eingeschoben. Durch die schräge Anordnung weist ein Kassettenhalter 3 und damit auch der Verteilereinschub 2 nur eine geringe Tiefe auf. Ebenso wird die Führung der Anschlußadern 8 und der Verbindungsadern 18 zwischen den Kassettenblöcken und den Kabelabfangungen 7 über den oberen Rand des Kassettenhalters hinweg erleichtert. In diesem Ausführungsbeispiel werden in einem Kassettenhalter sechs Kassettenblöcke mit jeweils vier Kassetten aufgenommen. Die einzelnen Kassetten können in einer anderen Ausführungsform auch um 90° um die Kassettenblock-Längsachse gedreht angeordnet sein, wodurch sich schmälere aber auch tiefere Verteilereinschübe ergeben. Der Kassettenhalter kann mit einer nicht dargestellten Abdeckplatte versehen werden, so daß die Anschluß- und Verbindungsadern abgedeckt sind.

In Figur 3 ist der Kassettenhalter nach vorne ausgeklappt. Ein Kassettenblock ist entnommen, um an ihm Montage- oder Rangierarbeiten auszuführen. Durch die Führung der Anschlußadern 8 können die Kassettenblöcke leicht entnommen und gut gehandhabt werden.

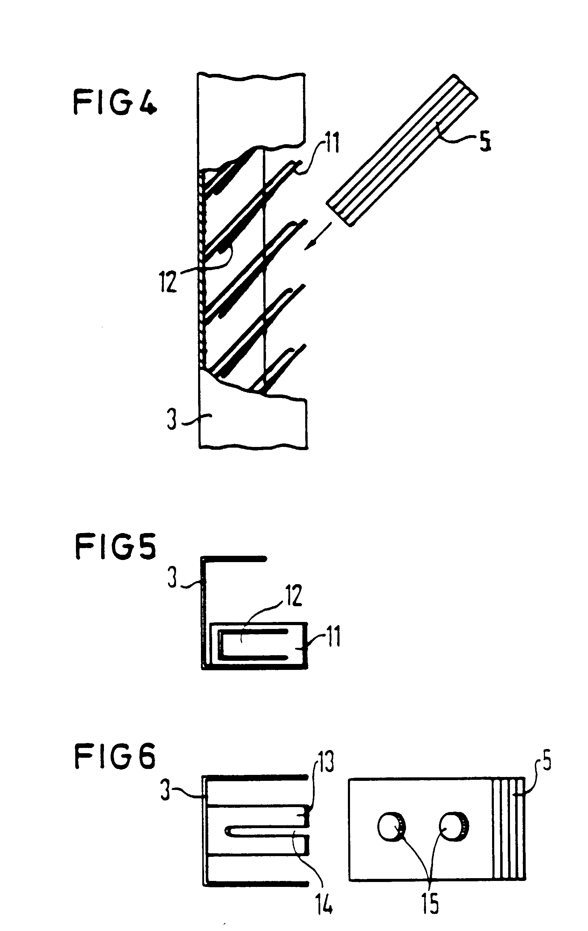

In Figur 4 ist eine Weiterbildung eines Führungsstegs 11 dargestellt. Dieser weist ein federndes Element 12 auf, durch das ein Kassettenblock festgeklemmt wird.

Figur 5 zeigt diesen Führungssteg in der Aufsicht. Dieser umfaßt nur einen Teil der Breite des Kassettenhalters. Hierdurch kann der Kassettenblock Verschraubungselemente aufweisen, die in den Freiraum neben den Führungssteg hineinragen.

In Figur 6 ist eine Variante einer Halteeinrichtung dargestellt, die im selben Winkel wie die Führungsstege angeordnet ist. Diese Halteeinrichtung ist als Befestigungssteg 13 mit einem Führungsschlitz 14 ausgebildet, der Befestigungselemente 15 des Kassettenblocks aufnimmt. Diese können beispielsweise Rändelschrauben sein, mit denen unter Verwendung eines Gewindebolzen auch die einzelnen Kassetten zu einem Block verbunden werden.

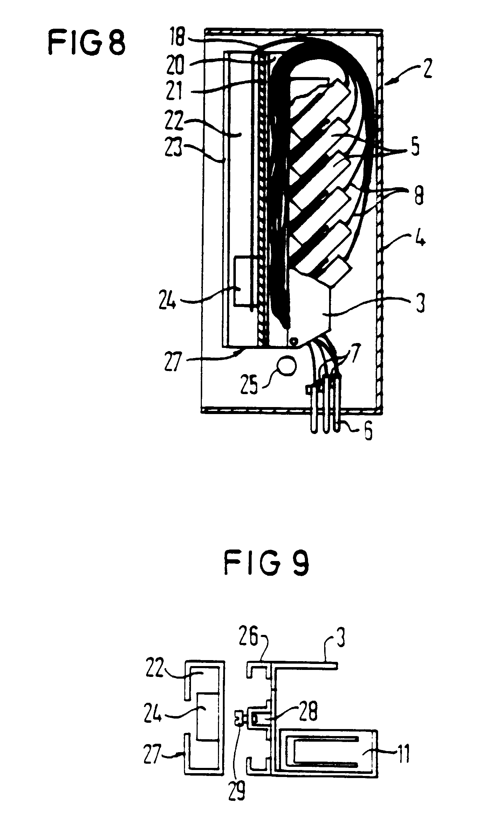

In Figur 7 ist ein Kassettenblock dargestellt. Dieser besteht hier aus vier Kassetten K1 bis K4, die Verbindungs- oder Koppelelemente und auch jeweils die Reservelänge der Lichtwellenleiter aufnehmen. Die Kassetten sind - den Seiten eines Buches ähnlich - miteinander klappbar verbunden. Hierdurch ist ein rascher Zugriff zu jeder einzelnen Kassette möglich.

In Figur 8 ist ein Verteilereinschub im Schnitt dargestellt, der eine Aufnahmevorrichtung für durchgehende Lichtwellenleiter aufweist.

In dem Verteilereinschub 2 ist ein Kassettenhalter 3 schwenkbar in einem Verteilergehäuse 4 angeordnet. Im Gegensatz zur bisherigen Ausführungsform sind an der Frontseite des Kassettenhalters eine Zwischenkammer 20 und eine von einem Aufnahmeteil 27 gebildete außen liegende Aufnahmekammer 22 vorgesehen. In der Zwischenkammer werden die Anschlußadern 8 von Anschlußkabeln 6 zu Kassettenblöcken 5 geführt. Die Verbindungsadern 18 zwischen den Kassettenblöcken werden dagegen zwischen Rückseite 21 und Vorderseite 23 des Aufnahmeteils in der Aufnahmekammer 22 geführt, wobei sie um eine Umlenkeinrichtung 24 gelegt werden. Eine Durchführungsöffnung 25 im Verteilereinschub ermöglicht den Zugang zu benachbarten Verteilereinschüben.

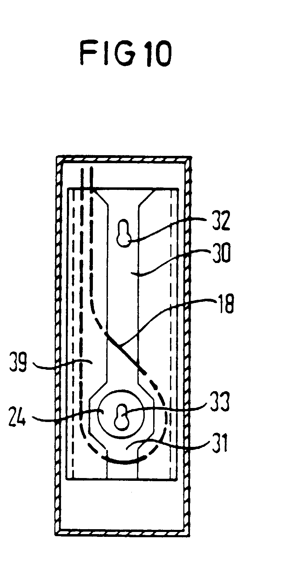

In Figur 9 ist eine Aufsicht des Kassettenhalters 2 dargestellt. Die Zwischenkammer wird aus zwei U-Profilleisten 26 gebildet, auf die das ein rechteckförmiges Hohlprofil aufweisende Aufnahmeteil 27 aufgesetzt ist. Das Aufnahmeteil 27 kann beispielsweise an einer Befestigungseinrichtung 28 mittels einer Schraube 29 befestigt werden. Die Kassettenblöcke sind in dieser Darstellung aus den Halteeinrichtungen 11 entfernt.

Zur Verdeutlichung ist in Figur 10 die Vorderansicht des Aufnahmeteils 27 dargestellt. Dies weist einen auf der Vorderseite durchgehenden Schlitz 30 auf, der im unteren Teil zu einer Aussparung 31 erweitert ist. Die verbleibenden Teile der Vorderseite dienen als Niederhalter 39 für die Verbindungskabel 18.

Ein so ausgeführtes Aufnahmeteil kann aus Blech gefertigt werden. Die Befestigung erfolgt durch zwei Langlöcher 32 und 33, die Aufweitungen für die Köpfe der Befestigungsschrauben aufweisen.

Eine weitere Möglichkeit, die den raschen Zugang zu der Zwischenkammer ermöglicht, wäre das Anbringen einer Schwenkeinrichtung am oberen Ende des Kassettenhalters.

Ein Verlegen der Verbindungsadern 18 kann nun erfolgen, ohne daß die Anschlußadern 8 stören. Die Verbindungsadern werden in den Schlitz 30 eingelegt und um die Umlenkeinrichtung 24 geführt, wobei die als Niederhalter 39 wirkenden Teile der Vorderseite die Verbindungsadern umfassen. Der Anschluß von neuen Verbindungsadern an eine Kassette erfolgt nach Umklappen des Kassettenhalters 3 in die Waagerechte.

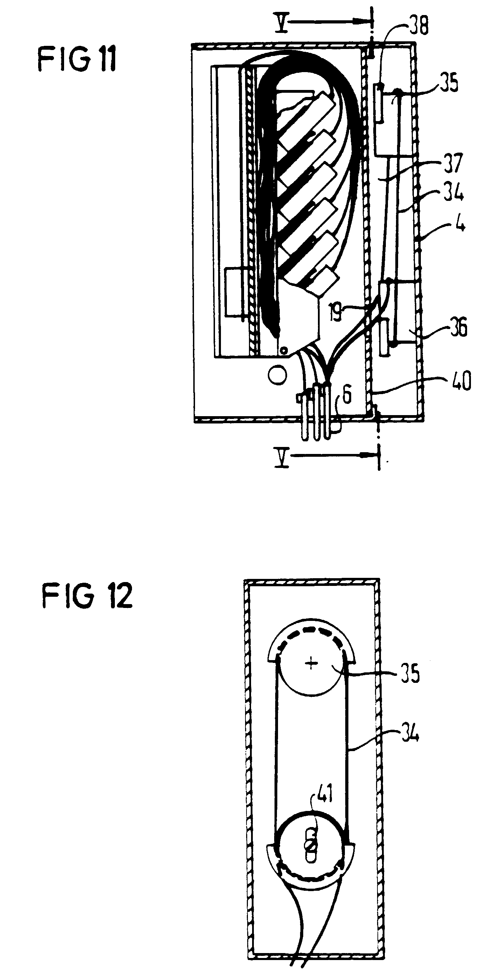

In Figur 11 weist das Verteilergehäuse 4 an seiner Rückwand eine Aufnahmeeinrichtung für durchgehende LWL-Adern 34 auf. Die Aufnahmeeinrichtung besteht aus zwei Umlenkkörper 35, 36, die als Walzen oder Halbwalzen ausgebildet und gegeneinander verschiebbar sind, so daß die um die Umlenkkörper geführten LWL-Adern gespannt aufbewahrt werden können. Zum Spannen sind in der Rückwand des Verteilergehäuses oder/und in den Umlenkkörpern Langlöcher vorgesehen. Die Enden der Anschlußkabel müssen hierbei natürlich in Zugabfangungen 7 (Fig. 1) fixiert werden, wie sie in der Offenlegungsschrift DE-A-41 13 114 beschrieben ist. Flansche 38 an den Umlenkkörpern verhindern ein Herabrutschen der LWL-Adern. Der Speicherraum 37 für die durchgehenden LWL-Adern kann durch eine abnehmbare Zwischenplatte 40 von dem Kassettenhalter 3 abgeteilt werden.

In der Schnittdarstellung Fig. 12 ist die Aufnahmeeinrichtung in der Vorderansicht dargestellt. Zumindest ein Umlenkkörper (oder die Rückwand) weist ein Langloch 41 auf, das ein Straffen der durchgehenden LWL-Adern 34 ermöglicht.

### Bezugszeichenliste

- 1: LWL-Aufteilungsgestell
- 2: Verteilereinschub
- 3: Kassettenhalter
- 4: Verteilergehäuse
- 5: Kassettenblock
- 6: Anschlußkabel
- 7: Kabelabfangung
- 8: Anschlußadern
- 9: Reibungsscheiben
- 10: Endanschläge
- 11: Halteeinrichtungen, Führungsstege
- 12: Führungsebenen
- 13: Befestigungssteg
- 14: Führungsschlitz
- 15: Befestigungselemente
- K1 bis K4: Kassetten
- 16: Drehachse
- 18: Verbindungsadern
- 19: Öffnung
- 20: Zwischenkammer
- 21: Rückseite
- 22: Aufnahmekammer
- 23: Vorderseite
- 24: Umlenkeinrichtung
- 25: Durchführungsöffnung
- 26: U-Profilleisten
- 27: Hohlprofil/Aufnahmeteil
- 28: Befestigungseinrichtung
- 29: Schraube
- 30: Schlitz
- 31: Aussparung
- 34: durchgehende LWL-Adern,
- 35, 36: Umlenkkörper
- 37: Speicherraum
- 33, 38: Seitenteil
- 39: Niederhalter
- 40: Zwischenplatte
- 41: Langloch

## Patentansprüche

1. Lichtwellenleiter-Aufteilungsgestell mit einem Verteilergestell (1), das mindestens ein Verteilergehäuse (4) und einen darin angeordneten, ausklappbaren Kassettenhalter (3) enthält, der um eine Drehachse, die am Verteilergehäuse (4) in dessen unterer Hälfte befestigt ist, aus einer senkrechten Aufbewahrungslage in eine Entnahmelage ausklappbar ist,
**dadurch gekennzeichnet**,
daß jeder Kassettenhalter (3) mehrere Halteeinrichtungen (11, 13) für Kassettenblöcke (5), die jeweils aus mehreren miteinander klappbar verbundenen Kassetten bestehen, aufweist und
daß die Halteeinrichtungen so ausgebildet sind, daß in der senkrechten Aufbewahrungslage des Kassettenhalters (3) die Kassettenblöcke (5) mit ihren Anschlußadern (8, 10) aufweisenden Seiten schräg nach oben gehalten werden.

2. Lichtwellenleiter-Aufteilungsgestell nach Anspruch 1,
**dadurch gekennzeichnet**,
daß als Halteeinrichtungen (11) Ablagefächer vorgesehen sind, in die die Kassettenblöcke (5) einschiebbar sind.

3. Lichtwellenleiter-Aufteilungsgestell nach Anspruch 1
oder 2, **dadurch gekennzeichnet**,
daß der Kassettenhalter (3) ein U-Profil aufweist.

4. Lichtwellenleiter-Aufteilungsgestell nach Anspruch 2,
**dadurch gekennzeichnet,**
daß die Ablagefächer durch einseitig im u-förmigen Kassettenhalter (3) angeordnete Führungsstege (11) realisiert sind.

5. Lichtwellenleiter-Aufteilungsgestell nach Anspruch 4,
**dadurch gekennzeichnet**,
daß die Führungsstege (11) jeweils ein federndes Element (12) aufweisen.

6. Lichtwellenleiter-Aufteilungsgestell nach einem der vorhergehenden Ansprüche,
**dadurch gekennzeichnet**,
daß der Kassettenhalter (3) eine lichte Weite von der Breite einer Kassette (K1) eines Kassettenblocks (5) aufweist.

7. Lichtwellenleiter-Aufteilungsgestell nach einem der vorhergehenden Ansprüche,
**dadurch gekennzeichnet**,
daß jeder Kassettenhalter (3) in einem u-förmigen oder wannenförmigen Verteilergehäuse (4) montiert ist und daß das Verteilergehäuse (4) unterhalb des Kassettenhalters (3) Kabelabfangungen (7) für die Anschlußkabel (6) aufweist.

8. Lichtwellenleiter-Aufteilungsgestell nach Anspruch 7,
**dadurch gekennzeichnet**,
daß die Kabelabfangungen (7) in der Tiefe und der Höhe gestaffelt angeordnet sind.

9. Lichtwellenleiter-Aufteilungsgestell nach einem der vorhergehenden Ansprüche,
**dadurch gekennzeichnet**,
daß zwischen dem Kassettenhalter (3) und dem Verteilergehäuse (4) im Bereich der Drehachse (16) Reibungsscheiben (9) angeordnet sind.

10. Lichtwellenleiter-Aufteilungsgestell nach einem der vorhergehenden Ansprüche,
**dadurch gekennzeichnet**,
daß ein Anschlag vorgesehen ist, durch den der Kassettenhalter (3) ausgeklappt in einer waagerechten Montagelage gehalten wird.

11. Lichtwellenleiter-Aufteilungsgestell nach einem der vorhergehenden Ansprüche,
**dadurch gekennzeichnet**,
daß an der Frontseite des Kassettenhalters (3) eine Zwischenkammer (20) zur Aufnahme der Anschlußadern und eine weitere Aufnahmekammer (22) für die Verbindungsadern (18) zwischen den Kassettenblöcken (5) angeordnet sind.

12. Lichtwellenleiter-Aufteilungsgestell nach Anspruch 11,
**dadurch gekennzeichnet**,
daß die Aufnahmekammer (22) durch ein Aufnahmeteil (27) mit rechteckförmigen Hohlprofil gebildet wird,
daß die Vorderseite des Aufnahmeteils (27) einen Längsschlitz (30) mit einer Erweiterung (31) an einem Ende aufweist, und daß eine Umlenkeinrichtung (24) für die Verbindungsadern vorgesehen ist.

13. Lichtwellenleiter-Aufteilungsgestell nach Anspruch 12,
**dadurch gekennzeichnet**,
daß das Aufnahmeteil (27) aus Blech gefertigt ist.

14. Lichtwellenleiter-Aufteilungsgestell nach einem der Ansprüche 12 und 13,
**dadurch gekennzeichnet**,
daß am Kassettenhalter (3) eine Befestigungseinrichtung (28) für das Aufnahmeteil (27) vorgesehen ist.

15. Lichtwellenleiter-Aufteilungsgestell nach Anspruch 14,
**dadurch gekennzeichnet**,
daß die Rückwand des Aufnahmeteils (27) mindestens ein an einer Seite kreisförmig erweitertes Langloch (32) aufweist.

16. Lichtwellenleiter-Aufteilungsgestell nach einem der Ansprüche 12 bis 15,
**dadurch gekennzeichnet,**
daß die Zwischenkammer (20) durch am Rand der Frontseite des Kassettenhalters (3) angebrachte Profilleisten (26) gebildet wird, an denen das Aufnahmeteil (27) anliegt.

17. Lichtwellenleiter-Aufteilungsgestell nach einem der Ansprüche 11 bis 16,
**dadurch gekennzeichnet**,
daß eine Aufnahmeeinrichtung für durchgehende Lichtwellenleiter-Adern (34) vorgesehen ist, die zwei mindestens halbkreisförmig ausgebildete und gegeneinander verschiebbaren Umlenkkörper (35, 36) aufweist.

18. Lichtwellenleiter-Aufteilungsgestell nach Anspruch 17,
**dadurch gekennzeichnet**,
daß die Aufnahmeeinrichtung im Verteilereinschub (2) hinter dem Kassettenhalter (3) angeordnet ist und daß die Umlenkkörper (35, 36) an der Rückwand des Verteilereinschubs (2) befestigt sind.

19. Lichtwellenleiter-Aufteilungsgestell nach Anspruch 17 oder 18,
**dadurch gekennzeichnet**,
daß die Umlenkkörper (35, 36) flanschförmig ausgebildete Seitenteile (38) aufweisen, die ein Abrutschen der Lichtwellenleiter-Adern (34) verhindern.

20. Lichtwellenleiter-Aufteilungsgestell nach einem der Ansprüche 17 bis 19,
**dadurch gekennzeichnet**,
daß in der Rückwand des Verteilereinschubes (2) und/oder in den Umlenkkörpern (35, 36) Langlöcher (41) zur verschiebebaren Befestigung der Umlenkkörper (35, 38) vorgesehen sind.

## Claims

1. Separating frame for optical fibres, having a distributor frame (1) which contains at least one distributor housing (4) and a cassette holder (3) which is arranged in the latter and can be pivoted out, about a rotation axis which is mounted on the distributor housing (4) in its lower half, into a removal position from a vertical storage position, characterized in that each cassette holder (3) has a plurality of holding devices (11, 13) for cassette blocks (5) which respectively comprise a plurality of cassettes pivotably connected to one another, and in that the holding devices are constructed such that in the vertical storage position of the cassette holder (3) the cassette blocks (5) are held with their sides having connecting buffered fibres (8, 10) extending obliquely upwards.

2. Separating frame for optical fibres according to Claim 1, characterized in that depositing compartments into which the cassette blocks (5) can be pushed are provided as holding devices (11).

3. Separating frame for optical fibres according to Claim 1 or 2, characterized in that the cassette holder (3) has a U-profile.

4. Separating frame for optical fibres according to Claim 2, characterized in that the depositing compartments are realized by guide webs (11) arranged on one side in the U-shaped cassette holder (3).

5. Separating frame for optical fibres according to Claim 4, characterized in that the guide webs (11) respectively have a resilient element (12).

6. Separating frame for optical fibres according to one of the preceding claims, characterized in that the cassette holder (3) has a clear width of the width of a cassette (K1) of a cassette block (5).

7. Separating frame for optical fibres according to one of the preceding claims, characterized in that each cassette holder (3) is mounted in a U-shaped or trough-shaped distributor housing (4) and in that the distributor housing (4) has cable clamps (7) for the connecting cables (6) below the cassette holder (3).

8. Separating frame for optical fibres according to Claim 7, characterized in that the cable clamps (7) are arranged in a staggered fashion in depth and height.

9. Separating frame for optical fibres according to one of the preceding claims, characterized in that friction discs (9) are arranged in the region of the rotation axis (16) between the cassette holder (3) and the distributor housing (4).

10. Separating frame for optical fibres according to one of the preceding claims, characterized in that a stop is provided by means of which the cassette holder (3) is held in a horizontal mounting position when pivoted out.

11. Separating frame for optical fibres according to one of the preceding claims, characterized in that an intermediate chamber (20) for receiving the connecting buffered fibres and a further receiving chamber (22) for the connecting buffered fibres (18) are arranged on the front side of the cassette holder (3) between the cassette blocks (5).

12. Separating frame for optical fibres according to Claim 11, characterized in that the receiving chamber (22) is formed by a receiving part (27) having a rectangular hollow profile, in that the front side of the receiving part (27) has a longitudinal slot (30) with a widened part (31) at one end, and in that a deflecting device (24) is provided for the connecting buffered fibres.

13. Separating frame for optical fibres according to Claim 12, characterized in that the receiving part (27) is made from sheet metal.

14. Separating frame for optical fibres according to one of Claims 12 and 13, characterized in that a mounting device (28) for the receiving part (27) is provided on the cassette holder (3).

15. Separating frame for optical fibres according to Claim 14, characterized in that the rear wall of the receiving part (27) has at least one elongated hole (32) widened at one side in the form of a circle.

16. Separating frame for optical fibres according to one of Claims 12 to 15, characterized in that the intermediate chamber (20) is formed by profile strips (26) which are fitted at the edge of the front side of the cassette holder (3) and against which the receiving part (27) bears.

17. Separating frame for optical fibres according to one of Claims 11 to 16, characterized in that a receiving device for continuous optical fibres (34) is provided which has two deflecting bodies (35, 36) which are constructed at least in the shape of a semicircle and can be displaced relative to one another.

18. Separating frame for optical fibres according to Claim 17, characterized in that the receiving device is arranged in the distributor slide-in unit (2) behind the cassette holder (3), and in that the deflecting bodies (35, 36) are mounted on the rear wall of the distributor slide-in unit (2).

19. Separating frame for optical fibres according to Claim 17 or 18, characterized in that the deflecting bodies (35, 36) have lateral parts (38) which are constructed in the form of flanges and prevent the optical fibres (34) from slipping off.

20. Separating frame for optical fibres according to one of Claims 17 to 19, characterized in that elongated holes (41) for displaceably mounting the deflecting bodies (35, 38) are provided in the rear wall of the distributor slide-in unit (2) and/or in the deflecting bodies (35, 36).

## Revendications

1. Boîtier de répartition pour guides d'ondes optiques, comportant un châssis de répartition (1), qui contient au moins un boîtier de répartition (4) et un support de cassettes (3) rabattable disposé à l'intérieur du boîtier et qui peut être ressorti par rabattement autour d'un axe de rotation, qui est fixé dans la moitié inférieure du boîtier de répartition (4), depuis une position verticale de rangement dans une position de prélèvement, caractérisé par le fait
que chaque support de cassettes (3) comporte plusieurs dispositifs de retenue (11,13) pour des blocs de cassettes (5), qui sont constitués chacun par plusieurs cassettes réunies entre elles de manière à être rabattables, et
que les dispositifs de retenue sont agencés de telle sorte que lorsque le support de cassettes (3) est dans la position verticale de rangement, les blocs de cassettes (5) sont maintenus obliquement vers le haut par leurs côtés possédant des conducteurs de raccordement (8,10).

2. Châssis de répartition pour guides d'ondes optiques suivant la revendication 1, caractérisé par le fait qu'il est prévu, comme dispositif de retenue (11), des casiers de rangement, dans lesquels les blocs de cassettes (5) peuvent être insérés.

3. Châssis de répartition pour guides d'ondes optiques suivant la revendication 1 ou 2, caractérisé par le fait que le support de cassettes (3) possède un profil en U.

4. Châssis de support pour guides d'ondes optiques suivant la revendication 2, caractérisé par le fait que les casiers de rangement sont constitués par des barrettes de guidage (11) qui sont disposées d'un côté dans le support de cassettes en forme de U (3).

5. Châssis de répartition pour guides d'ondes optiques suivant la revendication 4, caractérisé par le fait que les barrettes de guidage (11) possèdent chacune un élément élastique (12).

6. Châssis de répartition pour guides d'ondes optiques suivant l'une des revendications précédentes, caractérisé par le fait que le support de cassettes (3) possèdent une largeur intérieure égale à la largeur d'une cassette (K1) d'un bloc de cassettes (5).

7. Châssis de répartition pour guides d'ondes optiques suivant l'une des revendications précédentes, caractérisé par le fait que chaque support de cassettes (3) est monté dans un boîtier de répartition (4) en forme de U ou en forme de cuvette et que le boîtier de répartition (4) possède, au-dessous du support de cassettes (3), des logements (7) pour les câbles de raccordement (6).

8. Châssis de répartition pour guides d'ondes optiques suivant la revendication 7, caractérisé par le fait que les logements (7) pour les câbles sont disposés en étant étagés en profondeur et en hauteur.

9. Châssis de répartition pour guides d'ondes optiques suivant l'une des revendications précédentes, caractérisé par le fait que des disques de frottement (9) sont disposés entre le support de cassettes (3) et le boîtier de répartition (4), au niveau de l'axe de rotation (16).

10. Châssis de répartition pour guides d'ondes optiques suivant l'une des revendications précédentes, caractérisé par le fait qu'il est prévu une butée, grâce à laquelle le support de cassettes (3) est maintenu ouvert par rabattement dans une position horizontale de montage.

11. Châssis de répartition pour guides d'ondes optiques suivant l'une des revendications précédentes, caractérisé par le fait qu'une chambre intermédiaire (20) servant à loger les conducteurs de raccordement et une autre chambre de logement (22) pour les conducteurs de liaison (18) sont disposées entre les blocs de cassettes (5) sur la face avant du support de cassettes (3).

12. Châssis de répartition pour guides d'ondes optiques suivant la revendication 11, caractérisé par le fait que la chambre de logement (22) est formée par une partie de logement (27) possédant un profil creux rectangulaire, que la face avant de la partie de logement (27) possède une fente longitudinale (30) comportant une partie élargie (31) à une extrémité, qu'un dispositif déviateur (24) est prévu pour les conducteurs de liaison.

13. Châssis de répartition pour guides d'ondes optiques suivant la revendication 12, caractérisé par le fait que la partie de logement (27) est réalisée en tôle.

14. Châssis de répartition pour guides d'ondes optiques suivant l'une des revendications 12 et 13, caractérisé par le fait que sur le support de cassettes (3) est prévu un dispositif de fixation (28) pour la partie de logement (27).

15. Châssis de répartition pour guides d'ondes optiques suivant la revendication 14, caractérisé par le fait que la paroi arrière de la partie de réception (27) possède au moins un trou allongé (32) qui s'élargit d'un côté avec une forme circulaire.

16. Châssis de répartition pour guides d'ondes optiques suivant l'une des revendications 12 à 15, caractérisé par le fait que la chambre intermédiaire (20) est formée par des barrettes profilées (26) disposées sur le bord de la face avant du porte-cassettes (3) et sur lesquelles s'applique la partie de réception (27).

17. Châssis de répartition pour guides d'ondes optiques suivant l'une des revendications 11 à 16, caractérisé par le fait qu'il est prévu un dispositif de réception pour des conducteurs continus (34) de guides d'ondes optiques, qui comporte au moins deux corps de renvoi (35,36) agencés avec une forme semi-circulaire et déplaçables l'un par rapport à l'autre.

18. Châssis de répartition pour guides d'ondes optiques suivant la revendication 7, caractérisé par le fait que le dispositif de réception est disposé dans le tiroir de répartition (2) en arrière du support de cassettes (3) et que les corps de renvoi (35,36) sont fixés sur la paroi arrière du tiroir de répartition (2).

19. Châssis de répartition pour guides d'ondes optiques suivant la revendication 17 ou 18, caractérisé par le fait que les corps de renvoi (35,36) possèdent des parties latérales (38) agencées en forme de brides et qui empêchent un dérapage des conducteurs (34) des guides d'ondes optiques.

20. Châssis de répartition pour guides d'ondes optiques suivant l'une des revendications 17 à 19, caractérisé par le fait que des trous allongés (41) permettant la fixation avec possibilité de déplacement des corps de renvoi (35,38), sont prévus dans la paroi arrière du tiroir de répartition (2) et/ou dans les corps de renvoi (35, 38).
